# EUROPÄISCHE PATENTSCHRIFT

(11) **EP 1 680 294 B1**
(45) Veröffentlichungstag und Bekanntmachung des Hinweises auf die Patenterteilung: **04.03.2009**
(21) Anmeldenummer: 04789966.1
(22) Anmeldetag: 12.10.2004
(51) Int. Cl.: B60J 7/12

(54) **CABRIOLET-FAHRZEUG**
CONVERTIBLE VEHICLE
VEHICULE CABRIOLET

(30) Priorität: 25.10.2003 DE 10349848
(43) Veröffentlichungstag der Anmeldung: 19.07.2006
(73) Patentinhaber: Wilhelm Karmann GmbH, 49084 Osnabrück (DE)
(72) Erfinder: SCHONHORST, Heiko, 49492 Westerkappeln (DE); WIETHEGER, Thorsten, 49152 Bad Essen (DE); LICHER, Klaus, 49124 Georgsmarienhütte (DE)
(86) Internationale Anmeldenummer: PCT/DE2004/002260
(87) Internationale Veröffentlichungsnummer: WO 2005/039905

(56) Entgegenhaltungen:
- EP-A- 0 855 302
- EP-A- 1 038 709
- DE-A1- 19 936 099
- DE-C1- 4 130 180
- US-A- 5 816 644

## Beschreibung

Die Erfindung betrifft ein Cabriolet-Fahrzeug mit einem beweglichen Dach, das zumindest in seinem rückwärtigen Bereich einen flexiblen Dachbezug aufweist, nach dem Oberbegriff des Anspruchs 1.

Ein Cabriolet-Fahrzeug mit einem ganz oder teilweise flexiblen Dachbezug, etwa einem Vinyl- oder Textilbezug, weist, sofern dieser nicht mit seinem rückwärtigen Endbereich fest an der Karosserie des Fahrzeugs angebunden ist, häufig einen hinteren Spannbügel auf, an den der Bezug angebunden ist und mit dessen Hilfe er bei geschlossenem Dach auf einem Karosserieteil aufliegend gespannt werden kann. Es ist dabei bekannt, daß der Spannbügel eine in Draufsicht U-förmige Gestalt mit einem quer zum Fahrzeug verlaufenden Mittelteil und zwei im wesentlichen in Fahrzeuglängsrichtung verlaufenden und in Fahrtrichtung weisenden Seitenschenkeln aufweist. Um eine Beweglichkeit, beispielsweise Schwenkbarkeit, des Spannbügels zur Dachöffnung oder zum Schließen des Daches zu ermöglichen, ist es erforderlich, daß ein dessen Seitenschenkeln in Fahrtrichtung vorgeordneter Bezugbereich elastisch beweglich, insbesondere während der Spannbügelöffnung einfaltbar, ist. Daher können sich die Seitenschenkel des Spannbügels nicht in fester Verbindung zu dem Bezug bis etwa zu einer Schwenkachse des Spannbügels erstrecken, sondern müssen einen freien Abschnitt, eine sogenannte Stofflose, für die leichte und elastische Bewegung dieses Bezugbereiches belassen. Dennoch muß auch dieser Bereich der Stofflose bei geschlossenem Dach fest und dichtend auf der Karosserie aufliegen.

Die gattungsbildende EP 1038709 A2 zeigt ein Cabriolet-Fahrzeug, bei dem der bezüglich der Fahrtrichtung hinterste seitliche Rahmenteil des Daches mit einem nach hinten weisenden Schenkel versehen ist, an den sich heckwärts ein Stofflosebereich anschließt, der nicht von dem Schenkel kraftbeaufschlagt ist.

Der Erfindung liegt das Problem zugrunde, ein Cabriolet-Fahrzeug der genannten Art hinsichtlich der nicht an starren Teilen festgelegten Seitenbereiche eines flexiblen Dachbezugs zu verbessern.

Die Erfindung löst dieses Problem durch ein Cabriolet-Fahrzeug mit den Merkmalen des kennzeichens des Anspruchs 1. Vorteilhafte Ausgestaltungen des Gegenstandes der Erfindung ergeben sich aus den weiteren Ansprüchen 2 bis 8.

Mit der Erfindung ist ein definiertes und stets gleichartiges Einfalten der Stofflose bei der Dachbewegung sichergestellt. Die in diesem Bereich liegende Dichtung, die bei geschlossenem Dach auf einem Karosserieteil dichtend aufliegt, kann sofort bei der beginnenden Dachöffnung zwangseingeknickt werden und schleift damit nicht über den Karosserieteil. Die Lebensdauer der Dichtung und des unteren, der Karosserie zugewandten Randbereichs des Bezuges, der dabei mit angehoben wird, ist damit erheblich verlängert. Ebenso ist Abnutzungen am Karosserieteil, das etwa lackiert ist, vorgebeugt. Mit der definierten Faltung ist auch sichergestellt, daß der Bezugsstoff nicht eine Vielzahl von unterschiedlichen Faltungslinien erfährt und somit ebenfalls eine erhöhte Lebensdauer aufweist.

Wenn jeder Fahrzeuglängsseite genau eine Einfalteinrichtung zugeordnet ist, ist eine aufwendige Synchronisationseinrichtung für beide Fahrzeugseiten entbehrlich.

Sofern das Dach zusätzlich eine Spanneinrichtung umfaßt, die die Dichtungslinie der Stofflose bei geschlossenem Dach auf ein Widerlager der Karosserie aufdrückt, ist die dichtende Anlage des Daches an die Karosserie bei geschlossenem Dach verbessert. Zudem ist ein Ausleiern der Dichtungslinie durch die Einfaltbewegung zuverlässig vermieden.

Eine einfache Ausbildung einer Einfalteinrichtung sieht vor, daß diese pro Fahrzeugseite durch ein Zugseil mit einem Federelement gebildet ist. Ein Polyamidseil schneidet dabei weniger ein als ein Stahlseil und bietet daher die Möglichkeit, leichte Kunststofführungen und/oder -umlenkungen mit relativ kleinen Umlenkradien zu verwenden.

Das Zugseil kann sich etwa über einen großen Bereich der Seitenlinie des Daches von einer Dachspitze, die bei geschlossenem Dach am Windschutzscheibenrahmen anliegt, bis zu dem hinteren Spannbügel erstrecken. Dann ist sofort mit dem ersten Aufstellen der Dachspitze und ohne weitere Steuerungs- oder Antriebselemente auch ein Einknicken der Dichtung und der Stofflose verbunden, so daß diese sehr früh von dem Karosserieteil abhebt, was der gewünschten Verschleißminderung entgegenkommt.

Weitere Vorteile und Merkmale der Erfindung ergeben sich aus einem in der Zeichnung dargestellten und nachfolgend erläuterten Ausführungsbeispiel des Gegenstandes der Erfindung.

In der Zeichnung zeigt:
- Fig. 1: eine schematische Seitenansicht eines oberen Bereichs eines erfindungsgemäßen Cabriolet-Fahrzeugs mit geschlossenem Dach, der Übersichtlichkeit halber ohne Bezug eingezeichnet,
- Fig. 2: eine ähnliche Ansicht wie Fig. 1, jedoch mit eingezeichnetem Bezug,
- Fig. 3: das Detail III in Fig. 1,

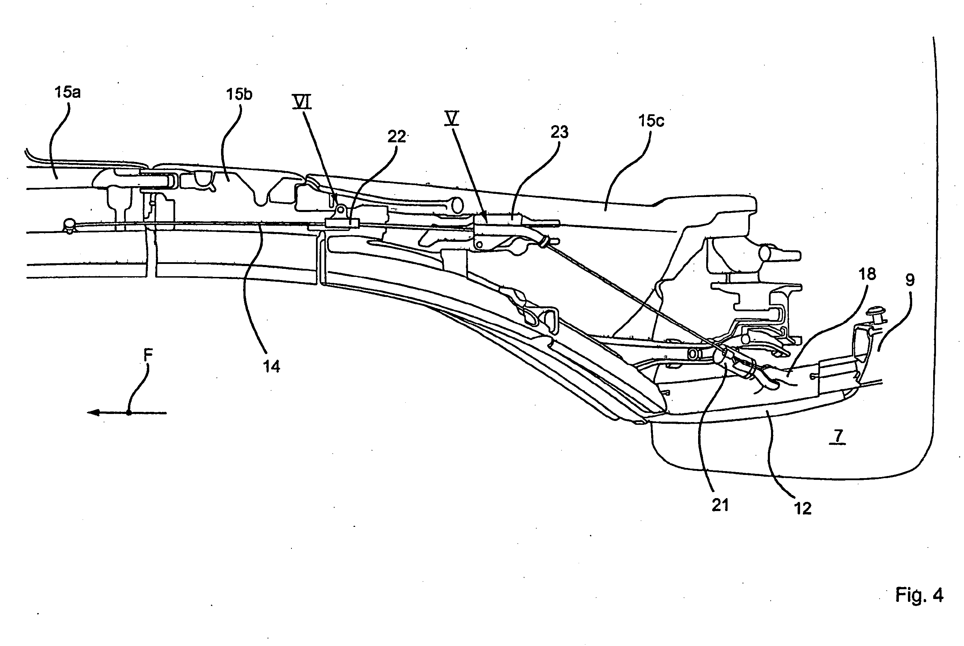

- Fig. 4: eine Ansicht auf einen seitlichen Dach- rahmenbereich nach Fig. 1 von oben - wiederum ohne eingezeichneten Bezug -,

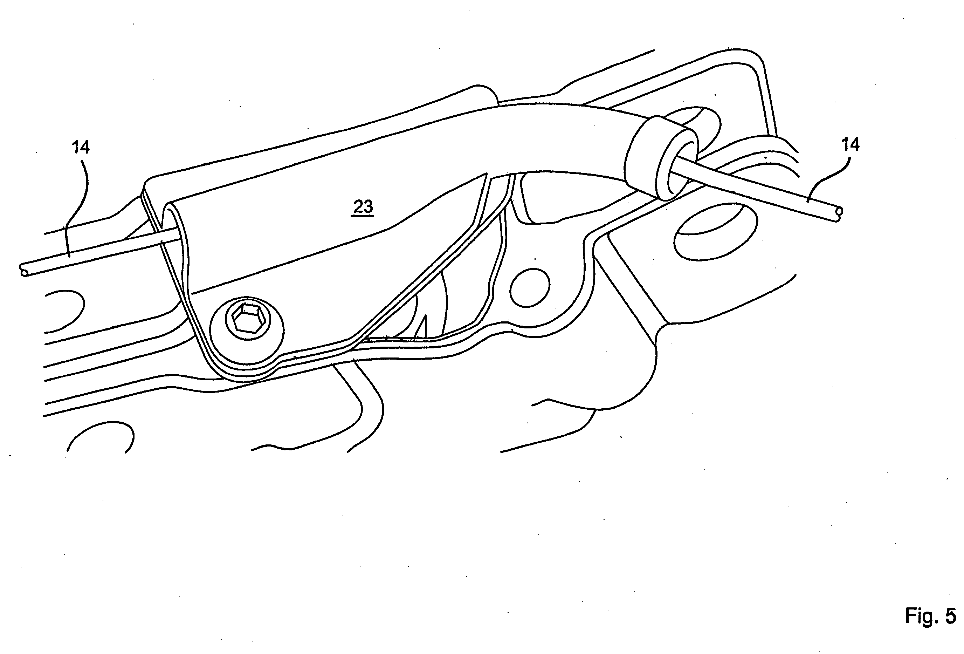

- Fig. 5: eine Detailansicht einer Umlenkung für das Zugseil der Einfalteinrichtung, etwa entsprechend einer Ansicht aus Richtung des Pfeils V in Fig. 4,

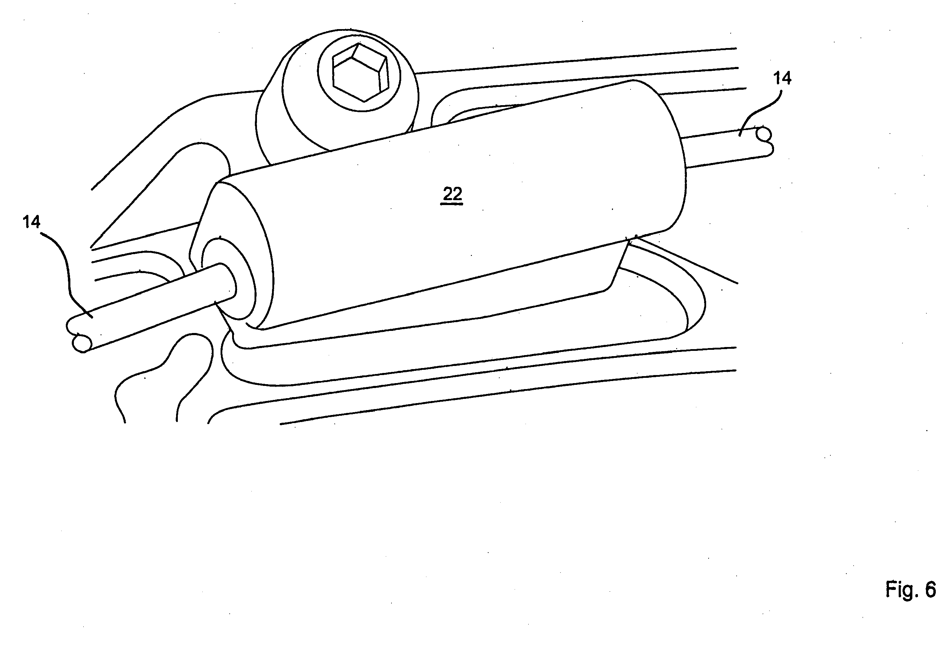

- Fig. 6: eine Detailansicht einer Führung für das Zugseil der Einfalteinrichtung, etwa entsprechend einer Ansicht aus Richtung des Pfeils VI in Fig. 4,
- Fig. 7: eine ähnliche Ansicht wie Fig. 1, jedoch während der Dachöffnung mit angehobener Dachspitze,
- Fig. 8: eine ähnliche Ansicht wie Fig. 3, jedoch während der Dachöffnung.

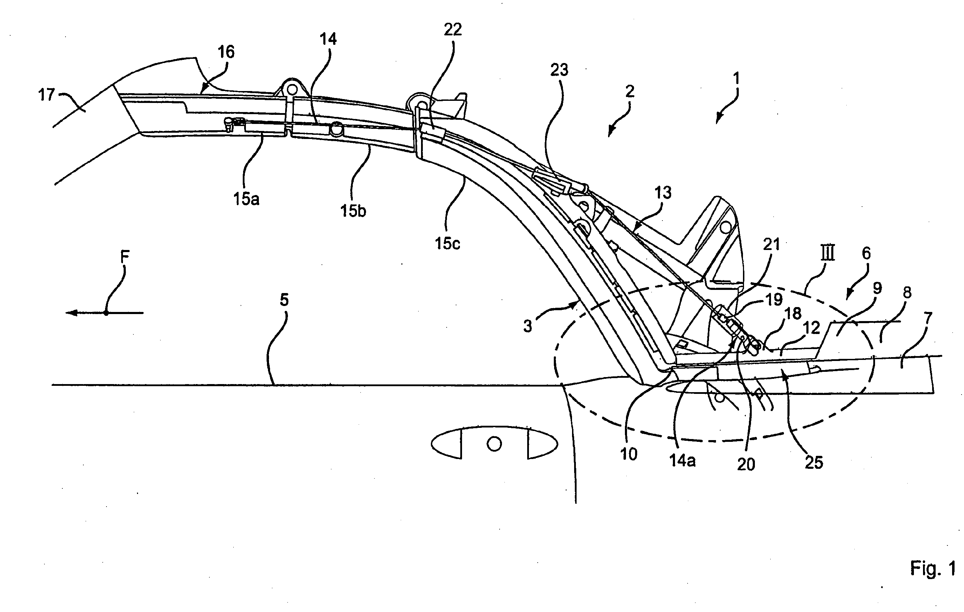

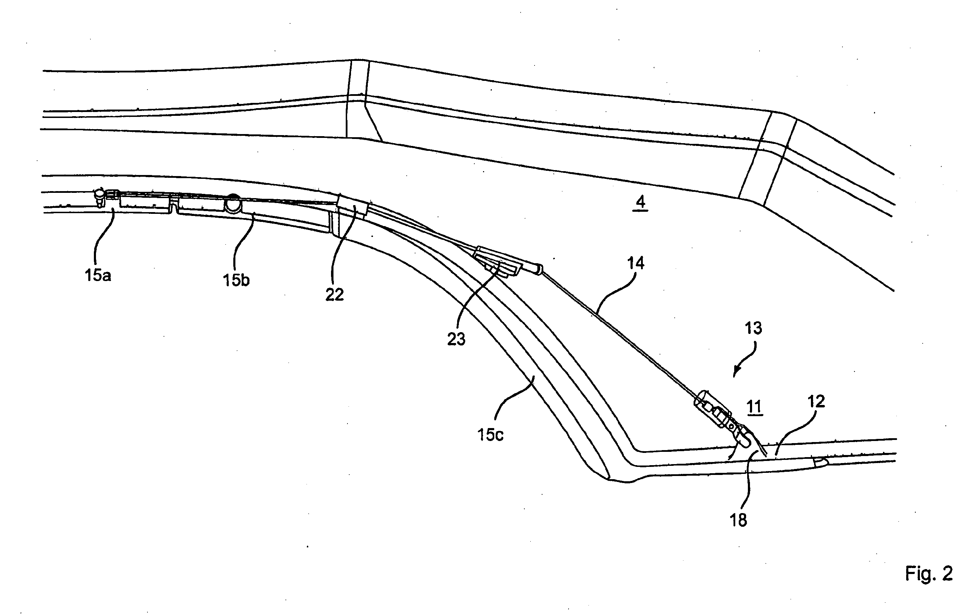

Das in Fig. 1 nur in seinem oberen Bereich schematisch dargestellte Cabriolet-Fahrzeug 1 umfaßt ein bewegliches Dach 2, das hier ein insgesamt mit 3 bezeichnetes bewegliches Gestänge umfaßt, das vollständig von einem Bezug 4 (eingezeichnet nur in Fig. 2; in Fig. 1 nicht dargestellt) überspannt ist. Alternativ ist auch möglich, daß ein flexibler Bezug nur im hinteren Teil des Daches 2 vorgesehen ist und das Dach in seinem in Fahrtrichtung F vorderen Bereich ein oder mehrere starre Außenhautteile umfaßt. Das Dach 2 kann insgesamt zu seiner Öffnung in der Karosserie 5 ablegbar sein.

Im gezeichneten Ausführungsbeispiel steht im geschlossenen Zustand das Dach 2 mit seinem hinteren Bereich 6 auf einem öffnungsfähigen Deckelteil 7 der Karosserie 5 auf.

In diesem Bereich 6 umfaßt das Dachgestänge 3 einen bei geschlossenem Dach 2 horizontal gelegenen hinteren Spannbügel 8, an den der Bezug 4 angebunden ist und der in dieser Stellung auf dem Deckelteil 7 aufliegt. Der Bügel 8 ist hier in Draufsicht U-förmig und umfaßt einen mittleren, quer zum Fahrzeug 1 liegenden Bereich sowie im wesentlichen in Fahrtrichtung F weisende Seitenschenkel 9. Der Spannbügel 8 ist um eine feste oder mit einem weiteren Teil des Gestänges 3, hier einem hinteren Seitenrahmenteil 15c, bewegliche horizontale Achse 10 aus der in Figur 1 gezeichneten Spannstellung, in der der Bezug 4 von dem abgesenkten Bügel 8 gespannt ist, in eine den Bezug 4 entspannende Stellung aufschwenkbar. Beim Aufschwenken hebt der Bügel 8 von dem Deckelteil 7 ab, so daß dieses nachfolgend öffnen kann.

In Fahrtrichtung F vor den seitlichen Schenkeln 9 liegt ein nicht an starre Teile angebundener Teilbereich 11 des Bezugs 4, die sogenannte Stofflose, die an ihrem unteren Rand eine die seitlichen Schenkel 9 in Fahrtrichtung F nach vorne verlängernde Dichtungslinie 12, etwa jeweils pro Fahrzeuglängsseite mittels eines gummielastischen Hohlprofils, ausbildet. Dieses soll bei geschlossenem Dach 2 (Fig. 1, Fig. 2) eine dichte Anlage dieses Bereichs 11 des Bezugs 4 gegenüber dem Abschnitt der Karosserie 5, auf dem es aufliegt, beispielsweise dem Deckelteil 7, bewirken. Der an seinem unteren Rand ohne Unterstützung durch den Spannbügel frei verlaufende Bereich 11 kann einige bis einige zehn Zentimeter lang sein und ist zur Öffnung des Daches 2 elastisch deformierbar und mehr oder minder einfaltbar.

Für ein definiertes und jedesmal gleichartiges Einfalten des Bereichs 11 und der Dichtungslinie 12 ist erfindungsgemäß zumindest eine Einfalteinrichtung 13 vorgesehen. Hier ist an jeder Fahrzeuglängsseite genau eine Einfalteinrichtung 13 ausgebildet. Diese umfaßt im gezeichneten Ausführungsbeispiel jeweils zumindest ein Zugseil 14. Dieses kann aus Stahl bestehen oder insbesondere aus einem weniger einschneidenden Kunststoff, etwa Polyamid. Das Seil 14 ist mit seinem hinteren Ende an der Dichtungslinie 12 im Bereich der Stofflose 11 und mit seinem in Fahrtrichtung F vorderen Ende an einem vorderen seitlichen Rahmenteil 15a, das fest mit der Dachspitze 16 verbunden ist, angelenkt. Die Dachspitze 16 ist in geschlossener Stellung (Fig. 1) an einem vorderen Windschutzscheibenrahmen 17 verriegelt.

Anstelle des Seils 14 könnten auch andere Vorrichtungen zum Zwangseinfalten der Stofflose 11 vorgesehen sein, etwa eine in die Dichtungslinie 12 eingelegte und im Einknicksinn vorbelastete Feder oder ein separates kleines Antriebsorgan, das die Dichtung 12 partiell anheben kann.

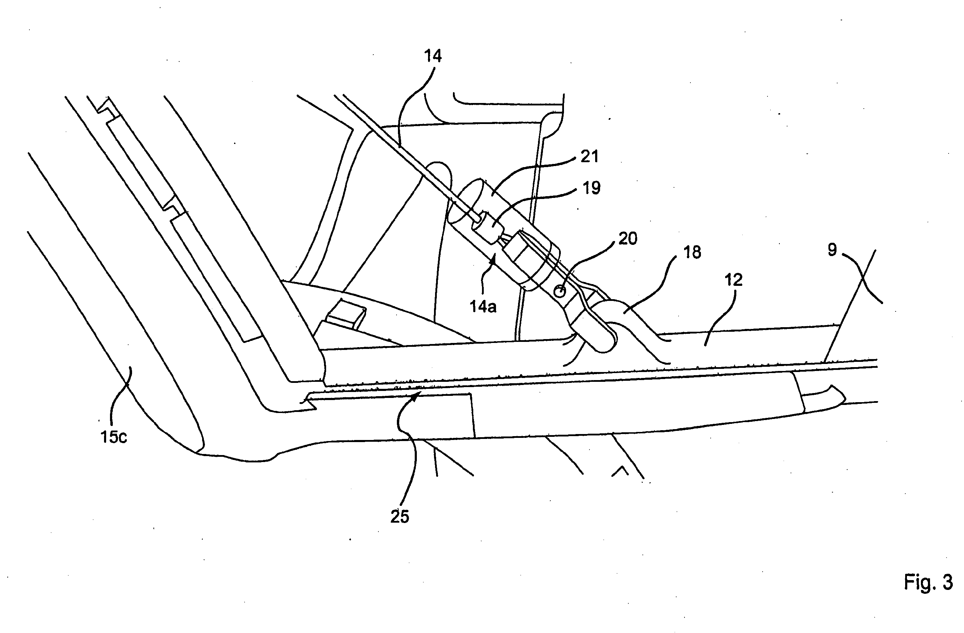

An die Dichtungslinie 12 kann ein Lagerauge 18 angespritzt sein, an dem das Zugseil 14 oder ein Antriebselement angreift. Im Ausführungsbeispiel ist hierzu das Ende des Zugseils 14 als Schlaufe gelegt und diese mit einer Ringklammer 19 gesichert (siehe Figur 3). Die Schlaufe kann dann einen Bolzen 20 umgreifen. Der ganze Bereich der Anlenkung des Zugseils 14 kann von einer Schutzhülse 21, etwa aus einem dünnen, gummielastischen Material gesichert sein, wodurch vermieden ist, daß der Bezugsstoff 4 an scharfkantigen Teilen reiben kann.

Das Gestell 3 des Daches 2 umfaßt hier pro Fahrzeugseite jeweils drei bei geschlossenem Dach 2 hintereinander liegende seitliche Rahmenteile 15a, 15b, 15c. Das vordere Rahmenteil 15a ist mit einem quer verlaufenden Träger fest verbunden und dabei Bestandteil der sogenannten Dachspitze 16. An diesem Rahmenteil 15a ist das vordere Ende des Zugseils 14 angebunden, verläuft dann beispielsweise über eine Führung 22 und eine Umlenkung 23, die bei Verwendung eines Polyamidseils 14 ebenfalls aus einem Kunststoff bestehen können, zur Dichtungslinie 12 der Stofflose 11 und greift dort in der geschilderten Weise an.

Um Toleranzen auszugleichen und für eine stets ausreichende Spannung zu sorgen, kann die Einfalteinrichtung zusätzlich zumindest eine Zugfeder 14a umfassen.

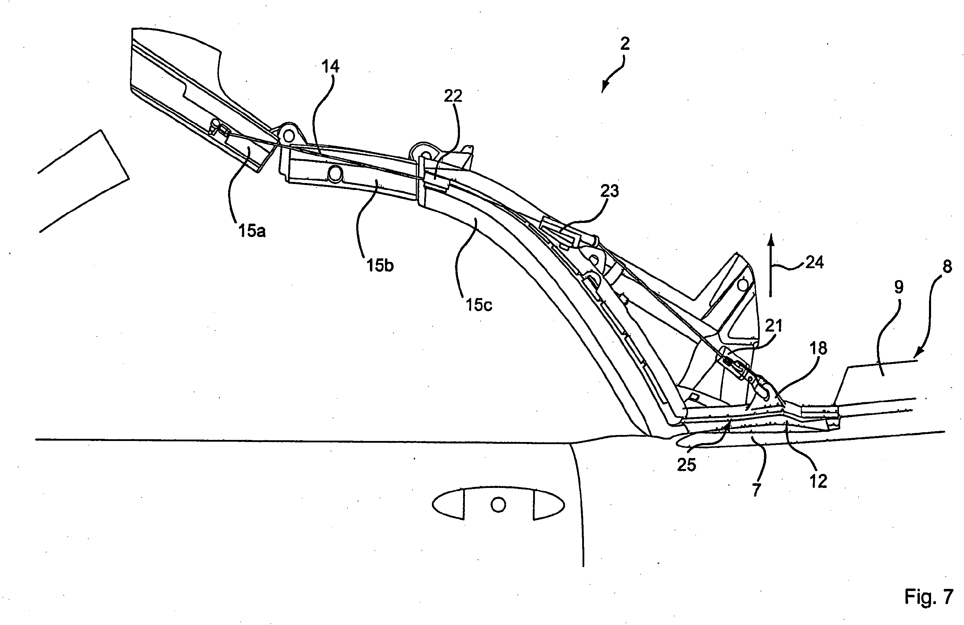

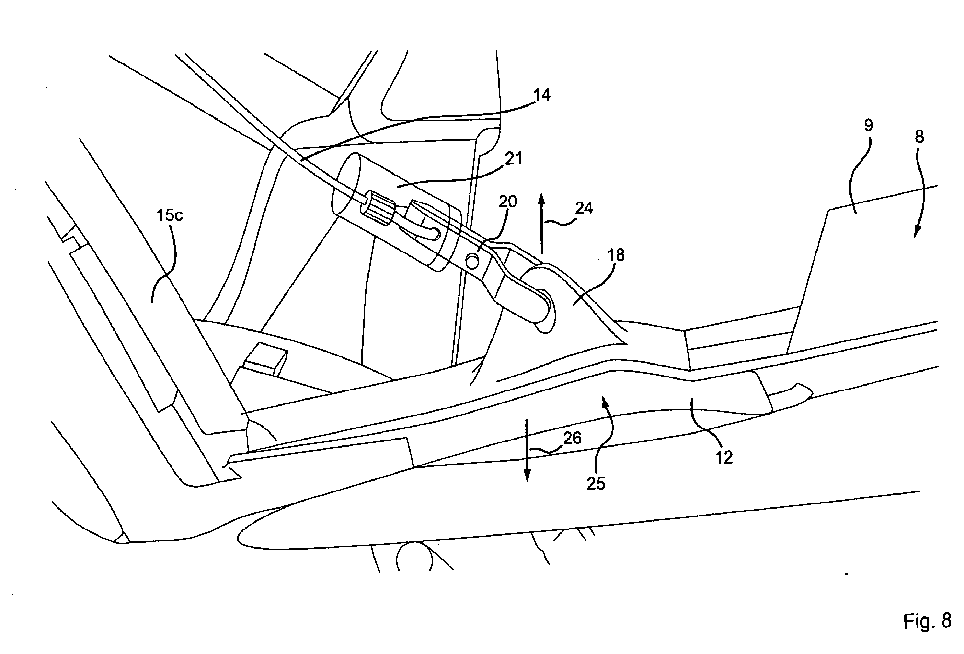

Bei Anheben der Dachspitze 16a (Fig. 7,Fig. 8) wird das vordere Ende des Zugseils 14 gespannt und zieht somit die Dichtungslinie 12 in definierter Weise in Richtung des Pfeils 24 aufwärts, wodurch diese sofort von ihrer Auflage auf dem Deckelteil 7 oder einem anderen Teil der Karosserie 5 leicht abhebt. Dabei können auch mehrere Anlenkungen des Zugseils 14 oder dergleichen an der Dichtungslinie 12 vorgesehen sein, so daß diese nicht in erster Linie - wie hier - einknickt, sondern insgesamt von der Karosserie 5 abgehoben wird.

Umgekehrt wird erst in der letzten Phase des Dachschließens, nämlich bei Absenken der Dachspitze 16, das Zugseil 14 so weit entspannt, daß sich die Dichtungslinie 12 der Stofflose 11 vollständig dichtend auf die Karosserie 5 legt. Auch diese Bewegung verläuft in definierter und immer gleicher Weise, so daß auch hier ein Reiben der bewegten Dichtung über die Karosserie 5 verhindert ist.

In einer vorteilhaften Ausgestaltung kann das Dach 2 zusätzlich eine Spanneinrichtung 25 umfassen, die ebenfalls der Dichtungslinie 12 zugeordnet ist, jedoch nicht ihre Öffnungs- oder Schließbewegung verbessert, sondern ihre Anlage an die Karosserie 5 bei geschlossenem Dach 2. Durch die Spanneinrichtung 25 wird eine in Richtung des Pfeils 26 wirkende Kraft auf die Dichtungslinie 12 ausgeübt , und diese wird in eine stramm auf die Karosserie 5 gespannte Lage gedrückt. Insbesondere kann unterstützend hierzu ein leicht konvex nach oben aufragendes Widerlager der Karosserie 5 vorgesehen sein. Dieses unterstützt auch beim Anheben der Dachspitze 16 die in Richtung des Pfeils 24 wirkende Einbiegung der Dichtungslinie 12.

Ansonsten arbeitet die Spanneinrichtung 25 jedoch gegenläufig zur Einfalteinrichtung 13. Die Spanneinrichtung 25 kann beispielsweise einer in der Dichtungslinie 12 liegende Blattfeder umfassen, die der Einfaltung der Dichtung 12 gerade entgegenwirkt. Die Verlegung der Spanneinrichtung 25 zumindest teilweise innerhalb der Dichtungslinie 12 sorgt für eine gegen äußeren Verschleiß geschützte Anordnung. Die linienhafte Druckausübung auf die Dichtungslinie 12 kann besonders gut gewährleistet werden. Es können auch sowohl die Spanneinrichtung 25 als auch die Einfalteinrichtung 13 jeweils in der Dichtungslinie 12 liegen

Bei Anheben der Dachspitze 16, wenn das Zugseil 14 der Einfalteinrichtung 13 gespannt wird, kann die Spanneinrichtung 25 entspannen, so daß die Stofflose 11 mit der Dichtungslinie 12 in der beschriebenen Weise einfalten kann. Um dies zu ermöglichen, kann beispielsweise das Zugseil 14 gegen die Federkraft der Spanneinrichtung 25 wirken oder eine Feder mit Gelenk über einen Totpunkt hinaus in eine entspannte Stellung überführen.

Es versteht sich, daß die Einfalteinrichtung 13 auch ohne eine Spanneinrichtung 25 am Fahrzeug 1 angeordnet sein kann.

## Patentansprüche

1. Cabriolet-Fahrzeug (1) mit einem beweglichen Dach (2), das zumindest in seinem rückwärtigen Bereich (6) einen flexiblen Bezug (4) aufweist, der in seinem hinteren Bereich an einem Spannbügel (8) gehalten ist, welcher aus einer das geschlossene Dach (2) formenden Spannstellung aufwärts verlagerbar ist,
**dadurch gekennzeichnet,**
**daß** dem Bezug (4) zumindest eine auf untere und in Fahrtrichtung (F) vor dem Spannbügel (8) liegende Randbereiche des Bezugs (4) wirkende Einfalteinrichtung (13) zugeordnet ist, die bei Dachöffnung (2) eine zwangseinfaltende Kraft auf diese Randbereiche ausübt.

2. Cabriolet-Fahrzeug nach Anspruch 1,
**dadurch gekennzeichnet,**
**daß** jeder Fahrzeuglängsseite genau eine Einfalteinrichtung (13) zugeordnet ist.

3. Cabriolet-Fahrzeug nach einem der Ansprüche 1 oder 2,
**dadurch gekennzeichnet,**
**daß** eine Einfalteinrichtung (13) sich zwischen einem vorderen Dachbereich, einer sog. Dachspitze (16), und dem hinteren Spannbügel (8) erstreckt.

4. Cabriolet-Fahrzeug nach einem der Ansprüche 1 bis 3,
**dadurch gekennzeichnet,**
**daß** die oder jede Einfalteinrichtung (13) ein Zugseil (14) umfaßt, mit dessen Hilfe diese an einem Profil einer seitlichen Dichtung (12) im Bereich einer Stofflose 11 angreift.

5. Cabriolet-Fahrzeug nach Anspruch 4,
**dadurch gekennzeichnet,**
**daß** das Zugseil (14) aus Polyamid besteht.

6. Cabriolet-Fahrzeug nach einem der Ansprüche 1 bis 5,
**dadurch gekennzeichnet,**
**daß** die oder jede Einfalteinrichtung (13) eine Zugfeder (14a) umfaßt.

7. Cabriolet-Fahrzeug nach einem der Ansprüche 1 bis 6,
**dadurch gekennzeichnet,**
**daß** das Dach (2) zumindest eine Spanneinrichtung (25) umfaßt, die einer im unteren Randbereich des Dachbezugs (4) liegenden Dichtungslinie (12) zugeordnet ist und diese in Spannstellung mit einer auf einen als Widerlager dienenden Bereich der Karosserie (5) drückenden Kraft beaufschlägt und die durch die Einfalteinrichtung (13) in definierter Richtung entspannbar ist.

8. Cabriolet-Fahrzeug nach einem der Ansprüche 1 bis 7,
**dadurch gekennzeichnet,**
**daß** dieses ein karosserieseitiges Deckelteil (7) umfaßt, auf dem das hintere Dachende (6) in geschlossener Stellung dichtend aufsteht und das zur Aufnahme des Daches (2) in der Karosserie (5) zu öffnen ist.

## Claims

1. A convertible vehicle (1) with a movable roof (2) that comprises, at least in its rear part (6), a flexible cover (4) which is held in its rear part by a tensioning bracket (8) that is upwardly displaceable out of a tensioning position forming the closed roof (2),
**characterized in that**
at least one folding device (13) acting upon lower peripheral regions of the cover (4), which are located in front of the tensioning bracket (8) in the driving direction (F), is assigned to the cover (4), said folding device (13) exerting a compulsory folding force on these peripheral regions when the roof (2) is being opened.

2. A convertible vehicle according to claim 1, **characterized in that** each longitudinal side of the vehicle has exactly one folding device (13) assigned to it.

3. A convertible vehicle according to any one of claims 1 or 2, **characterized in that** a folding device (13) extends between a front roof part, which is a so-called roof top (16), and the rear tensioning bracket (8).

4. A convertible vehicle according to any one of claims 1 to 3, **characterized in that** the or each folding device (13) comprises a tension cable (14) with the help of which the folding device (13) acts on a profile of a lateral seal (12) in the region of a fabric slack (11).

5. A convertible vehicle according to claim 4, **characterized in that** the tension cable (14) is made from polyamide.

6. A convertible vehicle according to any one of claims 1 to 5, **characterized in that** the or each folding device (13) comprises a tension spring (14a).

7. A convertible vehicle according to any one of claims 1 to 6, **characterized in that** the roof (2) comprises at least one tensioning device (25) which is assigned to a sealing line (12) located in the lower peripheral region of the roof cover (4) and which subjects said sealing line (12) in the tensioning position to a force pushing on an area of the vehicle body (5) that serves as an abutment, and which can be untensioned by the folding device (13) in a defined direction.

8. A convertible vehicle according to any one of claims 1 to 7, **characterized in that** it comprises a lid member (7) on the side of the vehicle body, on which lid member the rear roof end (6) is supported in a sealing manner in the closed position and which can be opened to accommodate the roof (2) in the vehicle body (5).

## Revendications

1. Cabriolet (1) avec un toit mobile (2) qui comprend, au moins dans sa partie arrière (6), une couverture flexible (4) qui est tenue, dans sa partie arrière, par un étrier de serrage (8) qui est déplaçable vers le haut d'une position de serrage constituant le toit fermé (2),
**caractérisé en ce qu'**au moins un dispositif de pliage (13), agissant sur des régions périphériques inférieures de la couverture (4) qui se trouvent devant l'étrier de serrage (8) dans le sens de roulement (F), est associé à la couverture (4), ledit dispositif de pliage (13) exerçant une force de pliage forcé sur ces régions périphériques lors de l'ouverture du toit (2).

2. Cabriolet selon la revendication 1, **caractérisé en ce qu'**exactement un dispositif de pliage (13) est associé à chaque côté longitudinal du véhicule.

3. Cabriolet selon l'une quelconque des revendications 1 ou 2, **caractérisé en ce qu'**un dispositif de pliage (13) s'étend entre une partie de toit avant, dite sommet du toit (16), et l'étrier de serrage (8) arrière.

4. Cabriolet selon l'une quelconque des revendications 1 à 3, **caractérisé en ce que** le ou chaque dispositif de pliage (13) comprend un câble de traction (14) à l'aide duquel le dispositif de pliage (13) agit sur un profil d'un joint latéral (12) dans la région d'un relâchement de tissu (11).

5. Cabriolet selon la revendication 4, **caractérisé en ce que** le câble de traction (14) est fabriqué en polyamide.

6. Cabriolet selon l'une quelconque des revendications 1 à 5, **caractérisé en ce que** le ou chaque dispositif de pliage (13) comprend un ressort de traction (14a).

7. Cabriolet selon l'une quelconque des revendications 1 à 6, **caractérisé en ce que** le toit (2) comprend au moins un dispositif de serrage (25) qui est associé à une ligne d'étanchéité (12) qui se trouve dans la région périphérique inférieure de la couverture de toit (4) et qui, en position de serrage, soumet la ligne d'étanchéité (12) à une force appuyant sur une zone de la carrosserie (5) servant de contre-butée, et qui peut être desserré par le dispositif de pliage (13) dans une direction définie.

8. Cabriolet selon l'une quelconque des revendications 1 à 7, **caractérisé en ce qu'**il comprend, du côté de la carrosserie, un élément formant couvercle (7) sur lequel l'extrémité arrière (6) du toit prend appui de manière étanche dans la position fermée et qui peut être ouvert pour ranger le toit (2) à l'intérieur de la carrosserie (5).
